# EUROPÄISCHE PATENTSCHRIFT

(11) **EP 3 488 064 B1**
(45) Veröffentlichungstag und Bekanntmachung des Hinweises auf die Patenterteilung: **09.10.2024**
(21) Anmeldenummer: 17742231.8
(22) Anmeldetag: 19.07.2017
(51) Int. Cl.: E05F 15/41, E05F 15/611, E05F 15/622, E05F 5/00

(54) **ANTRIEBSANORDNUNG EINER VERSCHLUSSELEMENTANORDNUNG**
DRIVE ARRANGEMENT OF A CLOSURE ELEMENT ARRANGEMENT
DISPOSITIF D'ENTRAÎNEMENT D'UN ENSEMBLE D'ÉLÉMENTS DE FERMETURE

(30) Priorität: 20.07.2016 DE 102016113353
(43) Veröffentlichungstag der Anmeldung: 29.05.2019
(73) Patentinhaber: Brose Fahrzeugteile SE & Co. Kommanditgesellschaft, Bamberg, 96052 Bamberg (DE)
(72) Erfinder: WITTELSBÜRGER, Michael, 96052 Bamberg (DE); KRÜGER, Harald, 96047 Bamberg (DE); FISCHER, Matthias, 96274 Itzgrund (DE); BUCHHEIM, Michael, 96050 Bamberg (DE); SCHÖDEL, Sebastian, 95488 Eckersdorf (DE)
(74) Vertreter: Gottschald Patentanwälte Partnerschaft mbB
(86) Internationale Anmeldenummer: PCT/EP2017/068266
(87) Internationale Veröffentlichungsnummer: WO 2018/015452

(56) Entgegenhaltungen:
- DE-A1- 10 234 371
- DE-A1- 102008 005 229
- DE-A1- 102012 108 094
- DE-U1- 202010 015 551
- US-A1- 2010 192 328
- US-A1- 2014 083 226

## Beschreibung

Die Erfindung betrifft eine Antriebsanordnung einer Verschlusselementanordnung eines Kraftfahrzeugs mit dem Oberbegriff von Anspruch 1 sowie eine Verschlusselementanordnung eines Kraftfahrzeugs gemäß Anspruch 9.

Die in Rede stehende Antriebsanordnung findet Anwendung im Rahmen der motorischen Verstellung jedweder Verschlusselemente eines Kraftfahrzeugs. Bei solchen Verschlusselementen kann es sich beispielsweise um Heckklappen, Heckdeckel, Motorhauben, Laderaumböden, aber auch um Türen, insbesondere Schiebetüren, eines Kraftfahrzeugs handeln. Insoweit ist der Begriff "Verschlusselement" vorliegend weit zu verstehen.

Die bekannte Antriebsanordnung (DE 10 2014 100 125 A1), von der die Erfindung ausgeht, ist mit einem Antriebsmotor und mit einem dem Antriebsmotor nachgeschalteten Spindel-Spindelmuttergetriebe ausgestattet. Die Antriebsanordnung weist ferner eine Bremse zum Bremsen des Antriebsstrangs auf, welche ein Halten des Verschlusselements in einer Offenstellung ermöglicht. Im Antriebsstrang ist ferner eine Überlastkupplung mit zwei klauenartigen Kupplungselementen vorgesehen, die im Überlastfall den Antriebsstrang auftrennen. Im Grenzbereich zum Überlastfall erfolgt eine Relativverschiebung der beiden klauenartigen Kupplungselemente relativ zueinander. Durch ihr Zusammenwirken wirken sie auf die Bremse in der Art ein, dass die Bremswirkung der Bremse gesteigert wird. Hier wird folglich mit einer steigenden Last im Antriebsstrang eine Steigerung der Bremswirkung der Bremse erzielt.

Nachteilig an dieser Antriebsanordnung ist, dass die Antriebsanordnung in den Situationen, in denen sie eine ohnehin schon hohe Last bewältigen muss, zusätzlich noch eine Lasterhöhung durch die stärker werdende Bremskraft erfährt. Hierdurch wird die Wahrscheinlichkeit des Eintretens eines Überlastfalls und des Auftrennens des Antriebsstrangs noch erhöht. Dieses Prinzip hat zur Folge, dass um ein sicheres Betreiben der Antriebsanordnung auch bei höheren Lasten auf dem Verschlusselement zu ermöglichen, relativ starke und damit auch teure Motoren eingesetzt werden müssen, da zusätzlich zur ohnehin schon höheren Last, beispielsweise aufgrund von auf dem Verschlusselement lastendem Schnee, zusätzlich auch noch eine erhöhte Bremswirkung überwunden werden muss

Eine Antriebsanordnung mit einer Fliehkraftbremse ist aus US2014/083226 A1 bekannt.

Der Erfindung liegt damit das Problem zugrunde, die bekannte Antriebsanordnung so auszugestalten und weiterzubilden, dass eine kostengünstig herzustellende Antriebsanordnung geschaffen wird, welche auch bei zusätzlichen Lasten auf dem Verschlusselement sicher funktioniert.

Das obige Problem wird bei einer Antriebsanordnung gemäß dem Oberbegriff von Anspruch 1 durch die Merkmale des kennzeichnenden Teils von Anspruch 1 gelöst.

Die wesentliche Überlegung ist es, die Bremse derart auszubilden, dass mit einer ansteigenden Last im Antriebsstrang die Bremswirkung der Bremse reduziert wird. Hierdurch muss im Grenzbereich zur Überlast vom Antriebsmotor nur ein geringeres Moment aufgebracht werden, so dass dieser insgesamt kleiner und damit kostengünstiger ausgelegt werden kann.

Grundlage dieser Überlegung ist die Feststellung, dass die Haltefunktion zum Halten des Verschlusselements in einer Offenstellung oftmals gerade im oberen Drittel des Öffnungswinkels des Verschlusselements gewährleistet sein muss. Aufgrund der Hebelverhältnisse der Verschlusselementanordnung resultiert hieraus, dass die auf den Antriebsstrang wirkende Last zum Halten des Verschlusselements in einer Offenstellung in der Regel deutlich kleiner ist als die im Antriebsstrang auftretende Last beim Öffnen des Verschlusselements aus dem Kraftfahrzeugschloss. Dies gilt umso mehr für den Fall, in dem eine zusätzliche Last auf dem Verschlusselement ruht, wie bspw. eine Schneelast.

Hieraus leitet sich das Grundprinzip der Erfindung her, die Bremse lastabhängig auszugestalten. Bei kleinen Lasten zur Realisierung der Haltefunktion, insbesondere unabhängig davon, ob diese seitens des Motors oder seitens der Spindel eingeleitet werden, wirkt hier dann vorzugsweise die volle Bremswirkung. Bei steigenden Übertragungsmomenten bewirkt die Bremse dann eine Reduzierung der Bremswirkung, beispielsweise beim Öffnen des Verschlusselements aus dem Kraftfahrzeugschloss. Dadurch, dass die Bremswirkung in den Bewegungsabschnitten des Verschlusselements, in denen eine höhere Last auf die Antriebsanordnung wirkt, reduziert ist, kann zur Realisierung auf kleinere und damit kostengünstigere Antriebe zurückgegriffen werden und/oder es können Verschlusselemente höheren Gewichts mit der Antriebsanordnung geöffnet und/oder geschlossen werden.

Erfindungsgemäß ist vorgesehen, dass bei einer motorischen Antriebsbewegung zum Öffnen der Verschlusselementanordnung und/oder bei einer manuellen Antriebsbewegung zum Schließen der Verschlusselementanordnung mit einer ansteigenden Last im Antriebsstrang die Bremswirkung der Bremse reduziert wird. Insbesondere in diesem Anwendungsfall ist ein Reduzieren der Bremswirkung besonders vorteilhaft, da diese beiden Anwendungsfälle, nämlich das motorische Öffnen und das manuelle Schließen des Verschlusselements typischerweise die Anwendungsfälle sind, in denen es zu Überlastfällen kommt.

Zusätzlich oder alternativ ist ferner vorgesehen, dass bei einer motorischen Antriebsbewegung zum Schließen der Verschlusselementanordnung und/oder bei einer manuellen Antriebsbewegung zum Öffnen der Verschlusselementanordnung mit einer ansteigenden Last im Antriebsstrang die Bremswirkung der Bremse reduziert werden.

Die Last ist ein von dem Antriebsstrang übertragenes Moment und/oder eine von außen auf die Antriebsanschlüsse wirkende, insbesondere bezogen auf die Antriebsachse axiale, Kraft. Sowohl für den Lastfall eines übertragenen Moments als auch für den Lastfall einer Kraft kann die Bremse besonders einfach auf mechanische Art und Weise realisiert werden. Dabei ist auch eine Kombination dieser Lastfälle möglich.

Gemäß Anspruch 2 wird vorgeschlagen, die Bremswirkung der Bremse kontinuierlich, insbesondere antiproportional, mit der ansteigenden Last zu reduzieren. Hierdurch wird eine gleichmäßige Öffnungs- und/oder Schließbewegung des Verschlusselements mittels der Antriebsanordnung ermöglicht.

Gemäß Anspruch 3 wird eine vordefinierte Grenzlast vorgeschlagen, ab welcher die Bremse die Bremswirkung mit ansteigender Last reduziert.

Gemäß Anspruch 5 kann die Antriebsanordnung eine Überlastkupplung aufweisen, welche bei einer Überlast im Antriebsstrang den Antriebsstrang auftrennt. Auf diese Weise kann die Antriebsanordnung auf effektive Art und Weise vor Überlast geschützt werden. Die Überlastkupplung ist dabei vorzugsweise in die Bremse integriert.

Gemäß Anspruch 6 wirkt die Bremse nach einer Auftrennung des Antriebsstrangs durch die Überlastkupplung nur auf einen Teil des Antriebsstrangs und/oder auf beide Teile des Antriebsstrangs.

Erfindungsgemäß wird die Bremswirkung mittels einer Relativverschiebung, insbesondere einer Relativverdrehung, zweier Bauteile der Bremse im Antriebsstrang, infolge einer ansteigenden Last reduziert. Die Relativverschiebung der Bauteile erfolgt dabei gemäß Anspruch 7 entgegen der Federvorspannung einer Federanordnung, insbesondere entlang einer Relativverschiebungskontur. Hierdurch wird es ermöglicht, die Reduzierung der Bremswirkung auf mechanisch ganz besonders einfache Art und Weise zu realisieren.

In einer Weiterbildung der Erfindung gemäß Anspruch 8 kann das Vorschubgetriebe als Spindel-Spindelmuttergetriebe ausgebildet sein.

Darüber hinaus wird die vorstehend beschriebene Aufgabe durch eine Verschlusselementanordnung eines Kraftfahrzeugs gemäß Anspruch 9 gelöst.

Dieser weiteren Lehre kommt eigenständige Bedeutung zu. Bei der erfindungsgemäßen Verschlusselementanordnung werden dieselben Vorteile wie vorstehend im Zusammenhang mit der Antriebsanordnung erreicht. Auf alle Ausführungen zur erfindungsgemäßen Antriebsanordnung darf verwiesen werden.

Die bevorzugte Weiterbildung der Verschlusselementanordnung gemäß Anspruch 10 beschreibt eine bevorzugte Abstimmung von Bremse und der Verschlusselementanordnung im Übrigen.

Im Folgenden wird die Erfindung anhand einer lediglich Ausführungsbeispiele darstellenden Zeichnung näher erläutert. In der Zeichnung zeigt
- Fig. 1: in einer ganz schematischen Darstellung den Heckbereich eines Kraftfahrzeugs mit einer Antriebsanordnung,
- Fig. 2: ein erstes Ausführungsbeispiel einer erfindungsgemäßen Antriebsanordnung in einem teilweisen Längsschnitt,
- Fig. 3: das Ausführungsbeispiel aus Fig. 2 im Ausschnitt III mit einer vorschlagsgemäßen Bremse in a) bei geringer Last und in b) bei hoher Last,
- Fig. 4: ein zweites Ausführungsbeispiel einer erfindungsgemäßen Bremse in a) bei geringer Last und in b) bei hoher Last,
- Fig. 5: ein drittes Ausführungsbeispiel einer erfindungsgemäßen Bremse a) bei geringer Last und b) bei hoher Last,
- Fig. 6: ein viertes Ausführungsbeispiel einer erfindungsgemäßen Bremse in a) bei hoher Drucklast, b) geringer Last und c) bei hoher Zuglast.

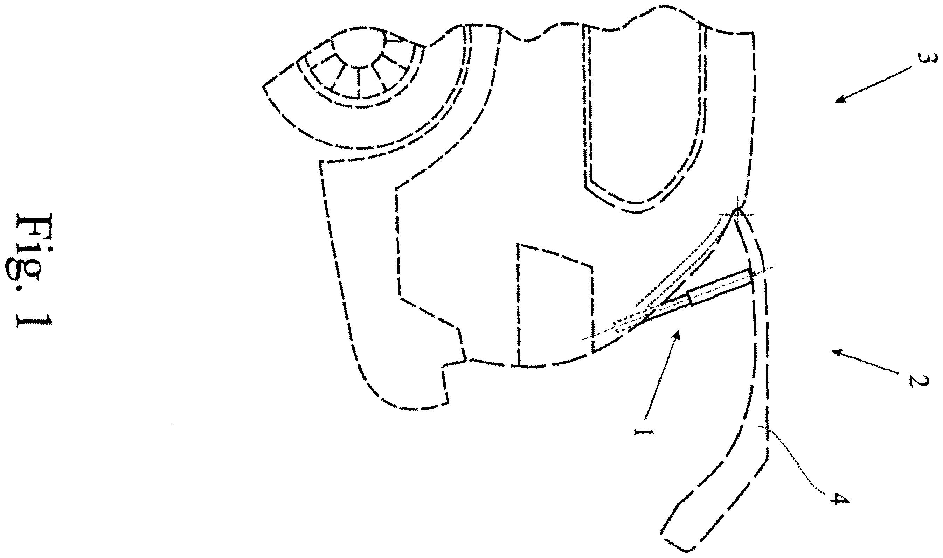

Die in der Fig. 1 dargestellte Antriebsanordnung 1 ist einer Verschlusselementanordnung 2 eines Kraftfahrzeugs 3 zugeordnet. Die Verschlusselementanordnung 2 weist ein als Heckklappe ausgestaltetes Verschlusselement 4 auf, das mittels der Antriebsanordnung 1 insbesondere zwischen einer Offenstellung und einer Schließstellung verstellbar ist.

Dabei kann es grundsätzlich vorgesehen sein, dass die Antriebsanordnung 1 das Verschlusselement 4 nur in einem Abschnitt des gesamten Verstellbereichs des Verschlusselements 4 verstellt. Vorzugsweise wird das Verschlusselement 4 aber über mindestens 80%, vorzugsweise mindestens 90%, weiter vorzugsweise mindestens 95% des Verstellweges von einer Offenstellung in eine Schließstellung und/oder von einer Schließstellung in eine Offenstellung verstellt. Beispielsweise kann das Verschlusselement 4 aber auf dem letzten Wegabschnitt in und/oder aus einer das Verschlusselement 4 verriegelnden Schließstellung mittels eines Schließhilfsantriebs und/oder eines Öffnungshilfsantriebs über ein Kraftfahrzeugschloss und insbesondere nicht die Antriebsanordnung 1 verstellt werden.

Der Begriff "Verschlusselement" ist vorliegend weit zu verstehen. Insoweit darf auf den einleitenden Teil der Beschreibung verwiesen werden. Entsprechend betrifft der Begriff "Verschlusselement" insbesondere solche Komponenten, die einer Verschlusselementanordnung 2 eines Kraftfahrzeugs 3 zugeordnet sind.

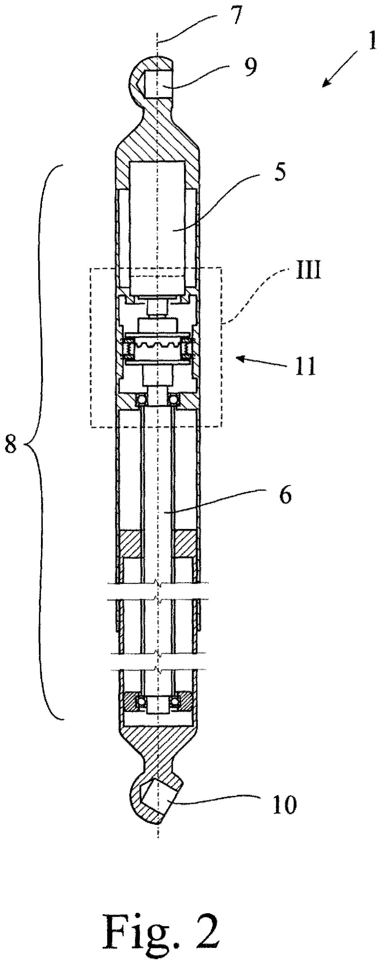

Die Antriebsanordnung 1 weist, wie in Fig. 2 gezeigt, einen Antriebsmotor 5 und ein dem Antriebsmotor 5 nachgeschaltetes Vorschubgetriebe 6 zur Erzeugung linearer Antriebsbewegungen entlang einer geometrischen Antriebsachse 7 auf. Der Antriebsmotor 5 und das Vorschubgetriebe 6 sind in einem der Antriebsanordnung 1 zugeordneten Antriebsstrang 8 angeordnet, welcher sich zwischen zwei mechanischen Antriebsanschlüssen 9, 10 erstreckt. Die Antriebsanschlüsse 9, 10 dienen hier zum Ausleiten der Antriebsbewegung auf das Verschlusselement 4 und die Karosserie des Kraftfahrzeugs 3.

Der Antriebsstrang 8 umfasst alle Kraftwirkungsketten, über die sich während der motorischen und/oder manuellen Verstellung ein Kraftfluss einstellt. Dies schließt nicht nur alle Komponenten ein, die Antriebsbewegungen übertragen, sondern auch stützende Komponenten.

Ferner weist die Antriebsanordnung 1 hier eine Bremse 11 auf. Die Bremse 11 ist zwischen Antriebsmotor 5 und dem Vorschubgetriebe 6 angeordnet. In den Ausführungsbeispielen sind der Antriebsmotor 5, das Vorschubgetriebe 6 und die Bremse 11 in einem Gehäuse la der Antriebsanordnung 1 aufgenommen.

Erfindungsgemäß ist die Bremse 11 derart ausgebildet, dass mit einer ansteigenden Last im Antriebsstrang 8 die Bremswirkung der Bremse 11 reduziert wird. Eine solche Auslegung der Bremse 11 ist besonders vorteilhaft, da aufgrund der charakteristischen Hebelarmverhältnisse einer Verschlusselementanordnung 2 die Haltekraft der Antriebsanordnung 1 oftmals deutlich kleiner ist, als die erforderliche Kraft zum Öffnen des Verschlusselements 4 aus einem Kraftfahrzeugschloss, also insbesondere auf dem ersten Verstellabschnitt aus der Schließstellung. Gerade in diesem Fall ist die erforderliche Kraft besonders hoch, wenn zusätzlich zu dem Verschlusselement 4 auch eine auf dem Verschlusselement 4 liegende Schneelast mitverstellt werden muss.

Hieraus ergibt sich der wesentliche Vorteil der vorliegenden Erfindung.

Dadurch, dass die Bremse 11 zum lastabhängigen Bremsen des Antriebsstrangs 8 in der Art ausgebildet ist, dass mit einer ansteigenden Last im Antriebsstrang 8 die Bremswirkung der Bremse 11 reduziert wird, kann die Bremse 11 zum Halten des Verschlusselements 4 in einer Offenstellung vorzugsweise mit voller Bremswirkung bremsen, bei einer steigenden Last, insbesondere einem steigendem Übertragungsmoment und/oder einer steigenden Axialkraft, insbesondere beim Öffnen des Verschlusselements 4 aus der Schließstellung, jedoch mit einer reduzierten Bremswirkung bremsen. Dies ermöglicht den Einsatz kleinerer Antriebsmotoren und damit eine Reduktion der Fertigungs- und Herstellungskosten für die Antriebsanordnung 1.

Die Bremswirkung wird bei der erfindungsgemäßen Bremse 11 mechanisch, durch das Abgleiten von Reibflächen 12a, 12b aneinander, bereitgestellt. Die Bremse 11 weist hierzu mindestens ein Reibflächenpaar 12 mit Reibflächen 12a, 12b auf, welche die Bremswirkung bereitstellen.

In den Ausführungsbeispielen und vorzugsweise ist es so, dass bei einer motorischen Antriebsbewegung zum Öffnen der Verschlusselementanordnung 2 und/oder bei einer manuellen Antriebsbewegung zum Schließen der Verschlusselementanordnung 2 mit einer ansteigenden Last im Antriebsstrang 8 die Bremswirkung der Bremse 11 reduziert wird.

Zusätzlich oder alternativ kann vorgesehen sein, dass bei einer motorischen Antriebsbewegung zum Schließen der Verschlusselementanordnung 2 und/oder bei einer manuellen Antriebsbewegung zum Öffnen der Verschlusselementanordnung 2 mit einer ansteigenden Last im Antriebsstrang 8 die Bremswirkung der Bremse 11 reduziert wird.

Die Last ist ein von dem Antriebsstrang 8 übertragenes Moment und/oder eine auf den Antriebsstrang 8, von außen auf die Antriebsanschlüsse 9, 10 wirkende, insbesondere auf die Antriebsachse 7 axial, wirkende Kraft.

Hier und vorzugsweise wird die Bremswirkung der Bremse 11 kontinuierlich, insbesondere antiproportional mit der ansteigenden Last reduziert. Anstelle einer solchen, bevorzugten, linearen Wandlung zwischen dem Anstieg der Last und der Reduktion der Bremswirkung kann auch eine nichtlineare Wandlung zwischen dem Anstieg der Last und der Reduktion der Bremswirkung eingestellt werden.

Vorzugsweise ist eine vordefinierte, insbesondere untere, Grenzlast vorgesehen, ab der die Bremse 11 die Bremswirkung mit ansteigender Last reduziert. Dies ermöglicht es, eine Mindestbremswirkung zum Halten des Verschlusselements 4 in einem vordefinierten Lastbereich vorzusehen, in dem das Verschlusselement 4 sicher von der Bremse 11 gehalten wird. Zusätzlich kann eine vordefinierte obere Grenzlast vorgesehen sein, ab der die Bremse 11 die Bremswirkung nicht weiter reduziert und/oder bei der der Antriebsstrang 8 aufgetrennt wird.

Die Reduzierung der Bremswirkung der Bremse 11 ist hier und vorzugsweise eine Reduzierung der Bremswirkung bis auf einen Sockelwert. Insofern ist die Bremse 11 vorzugsweise zum ständigen Bremsen zumindest eines Teils des Antriebsstrangs ausgebildet. Die Bremswirkung kann in einer alternativen Ausgestaltung jedoch auch vollständig aufgehoben werden.

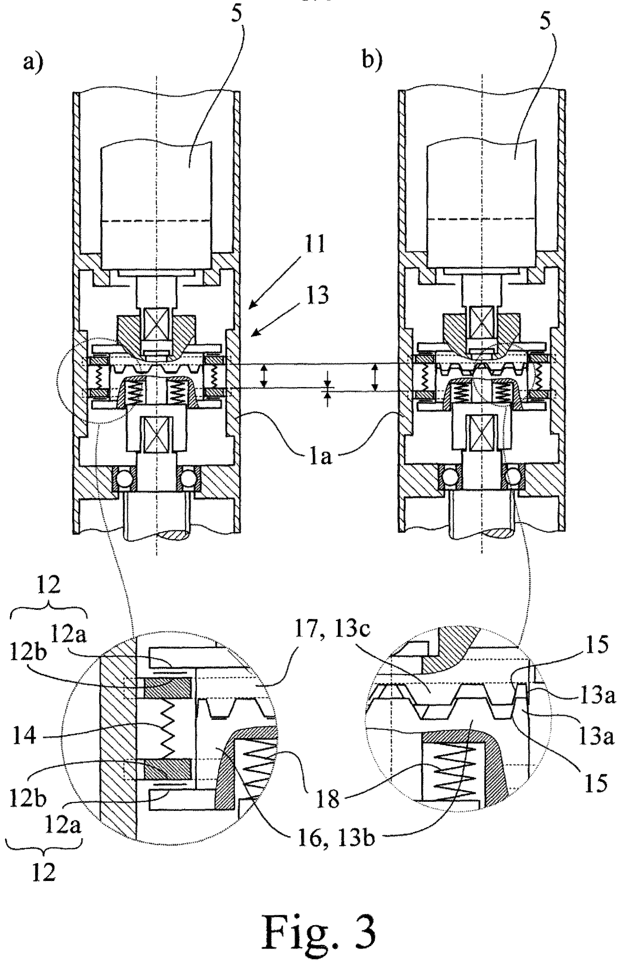

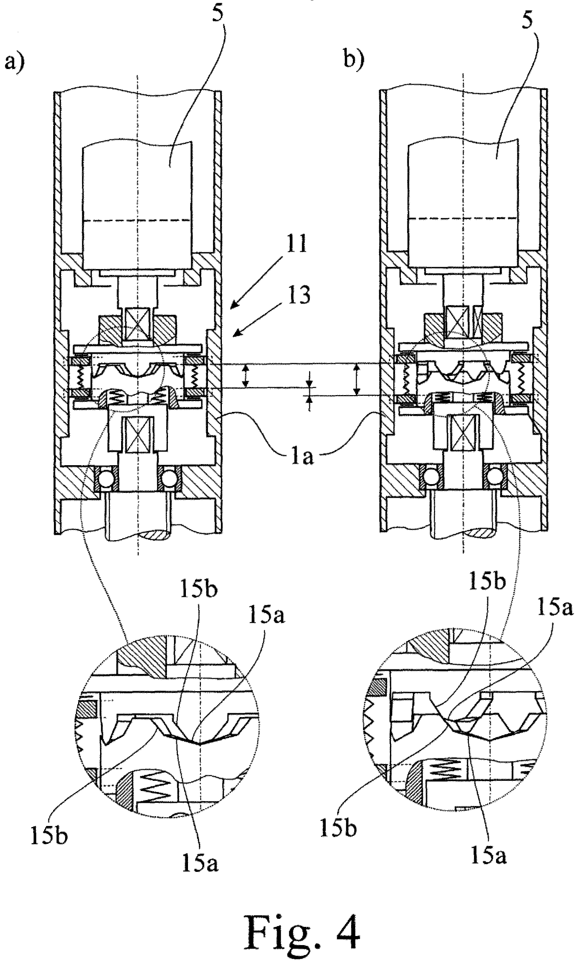

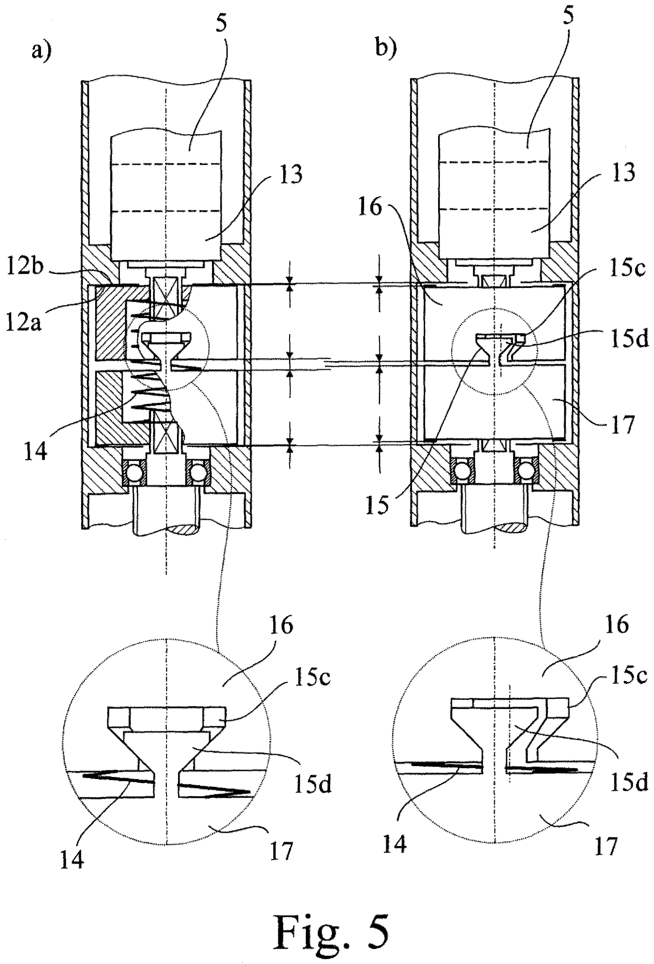

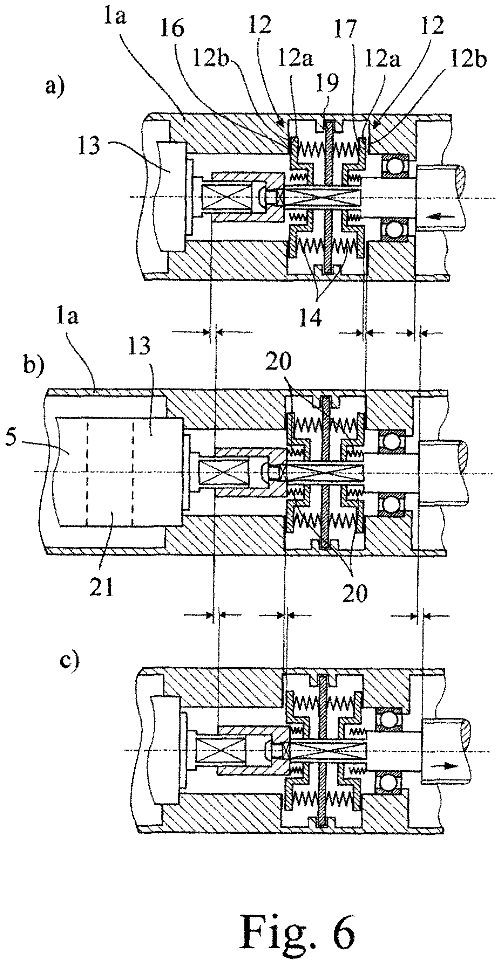

Insbesondere die Auftrennung des Antriebsstrangs 8 erfolgt hier vorzugsweise über eine Überlastkupplung 13. Diese trennt den Antriebsstrang 8 auf, wenn eine Überlast auftritt. Die Überlastkupplung 13 ist vorzugsweise in die Bremse 11 integriert, wie dies in den Ausführungsbeispielen der Fig. 3 und 4 der Fall ist. Eine solche Überlastkupplung 13 kann jedoch auch unabhängig von der Bremse 11 vorgesehen sein, wie dies in den Ausführungsbeispielen der Fig. 5 und 6 der Fall ist.

Vorzugsweise trennt die Überlastkupplung 13 den Antriebsstrang 8 in zwei Teile. Nach der Auftrennung des Antriebsstrangs 8 wirkt die Bremse 11 vorzugsweise nur auf einen Teil des Antriebsstrangs 8. Die Bremse 11 kann jedoch auch nach der Auftrennung des Antriebsstrangs 8 auf beide Teile des Antriebsstrangs 8 wirken.

Darüber hinaus kann eine vordefinierte obere Grenzlast definiert sein, ab der die Bremswirkung der Bremse 11 aufgehoben ist und/oder nicht weiter reduziert wird. Die Grenzlast kann dabei eine Kraft und/oder ein Moment sein.

In den Ausführungsbeispielen weist die Bremse 11 mindestens ein Reibflächenpaar zur Erzeugung der Bremswirkung auf. Hier ist eine Reibfläche 12a an einem drehbaren Bauteil 16, 17 der Bremse 11 angeordnet und die zu dieser Reibfläche 12a korrespondierende Reibfläche 12b ist drehfest, insbesondere am Gehäuse 1a der Antriebsanordnung 1, angeordnet.

Das Reibflächenpaar 12 ist mittels einer Federanordnung 14 aufeinander vorgespannt. Zur Reduzierung der Bremskraft wird hier und vorzugsweise die Vorspannkraft der Federanordnung 14 reduziert.

Nachfolgend wird nun zunächst das Ausführungsbeispiel der Fig. 3 beschrieben.

In der Fig. 3a ist die Bremse 11 bei niedriger Last gezeigt. Die in die Bremse 11 integrierte Überlastkupplung 13 ist hier und vorzugsweise als Klauenkupplung ausgebildet. Die Klauen 13a der Überlastkupplung 13 weisen Schrägflächen auf, welche bei ansteigender Last, wie in der Fig. 3 ein Abgleiten der Klauen 13a aneinander ermöglichen. Insofern bilden diese Schrägflächen Relativverschiebungskonturen 15. Mit ansteigender Last, wie in der Fig. 3b gezeigt, wird nun zumindest ein Bauteil 16, hier das Klauenelement 13b, relativ von einem anderen Bauteil 17, hier das anderen Klauenelement 13c, wegbewegt. Dies geschieht gegen die Vorspannkraft der Federanordnung 18 der Überlastkupplung 13 - Kupplungsfederanordnung. Die Bauteile 16, 17 bewegen sich bei steigender Last auseinander, wie dies in der Fig. 3 bemaßt ist. Hierdurch wird die Federanordnung 14 der Bremse 11 entspannt. Die Reibflächenpaare 12 der Bremse 11 bewegen sich auseinander und die Federvorspannung der Federanordnung 14 wird reduziert. Entsprechend sinkt die resultierende Bremswirkung.

Das Auseinanderbewegen der Reibflächenpaare 12 der Bremse 11 wird hier dadurch ermöglicht, dass eine der Reibflächen 12b eines Reibflächenpaares 12 drehfest, aber entlang der Antriebsachse 7 verschiebbar gelagert ist und eine korrespondierende Reibfläche 12b des Reibflächenpaares 12 entlang der Antriebsachse 7 mit dem Bauteil 16 verschiebbar und drehbar ist.

Zu dem Zeitpunkt, zu dem die Relativverschiebungskonturen 15 beim Ausfiihrungsbeispiel der Fig. 3 außer Eingriff miteinander kommen, wird die Überlastkupplung 13 aktiviert und der Antriebsstrang 8 aufgetrennt. Nichtsdestotrotz stellt die Bremse 11 weiterhin eine reduzierte Bremswirkung bereit.

Hier ist die Bremswirkung reduzierende Last ein Moment. Die Relativverschiebung der Bauteile ist hier und vorzugsweise eine Verdrehung um den Richtungsvektor der Last, insbesondere des Lastmoments, und/oder eine axiale Verschiebung entlang dem Richtungsvektor der Last, insbesondere des Lastmoments. Hier bewegen sich die Bauteile 16, 17 voneinander weg.

Das Ausführungsbeispiel der Fig. 4 entspricht weitestgehend dem der Fig. 3. Insoweit wird hinsichtlich Aufbau und Funktionsweise auf die Beschreibung des Ausführungsbeispiels der Fig. 3 verwiesen.

Im Ausführungsbeispiel der Fig. 4 sind die Relativverschiebungskonturen 15 jedoch anders ausgestaltet. Anstelle eines einzigen linearen Abschnittes weisen diese hier und vorzugsweise zwei lineare Abschnitte unterschiedlicher Steigung auf. Es ist dann möglich, auf einem ersten Abschnitt 15a der Relativverschiebungskonturen 15 mit geringerer Steigung die Bremswirkung der Bremse 11 weniger zu reduzieren als auf einem zweiten Abschnitt 15b mit höherer Steigung. Mit der Steigung ist hier die Steigung der Relativverschiebungskonturen 15 zu einer Ebene orthogonal zur Antriebsachse 7 gemeint.

Die korrespondierenden Relativverschiebungskonturen 15 der beiden Bauteile 16, 17 weisen hier und vorzugsweise Abschnitte 15a, 15b gleicher Steigung auf. Diese können gleich lang, wie in der Fig. 3 gezeigt, oder aber, unterschiedlich lang sein, wie in der Fig. 4 gezeigt. Im Falle unterschiedlich langer Abschnitte 15a, 15b ist vorzugsweise mindestens ein Abschnitt 15a, 15b länger als der zu diesem Abschnitt 15a, 15b korrespondierende Abschnitt 15a, 15b. Besonders bevorzugt sind zumindest die korrespondierenden Abschnitte 15a geringerer Steigung unterschiedlich lang. Durch unterschiedlich lange Abschnitte 15a, 15b kann die Reduktion der Bremswirkung im Verhältnis zum Lastanstieg über die Steigung besonders einfach eingestellt werden. Vorzugsweise wird die Bremswirkung auf einem ersten Abschnitt im Verhältnis zu einem Lastanstieg weniger reduziert, als auf einem zweiten Abschnitt der Relativverschiebungskontur 15.

Auch das weitere Ausführungsbeispiel der Fig. 5 zeigt ein ähnliches Grundprinzip. Auch hier ist die Last, in deren Abhängigkeit die Bremswirkung der Bremse 11 reduziert wird, ein Moment. Auch hier wird die Bremswirkung mechanisch reduziert.

Ebenfalls werden hier in Abhängigkeit von der Last zwei Bauteile 16, 17, welche vorzugsweise als Töpfe ausgebildet sind, relativ zueinander verschoben und dadurch die Bremswirkung reduziert. Bei den beiden Bauteilen 16, 17 sind die Relativverschiebungskonturen 15 hier nach Art einer Ausnehmung 15c und einer in diese eingreifenden Nase 15d ausgebildet. Wie in den Ausführungsbeispielen der Fig. 3 und 4 verlaufen die Relativverschiebungskonturen 15 unter einem Winkel zur Antriebsachse 7. Sie schneiden diese hier nicht. Vorzugsweise beträgt der Winkel zwischen der Relativverschiebungskontur und der Antriebsachse 7 zwischen 30° und 60°.

Die beiden Bauteile 16, 17 sind hier im Unterschied zu der Ausgestaltung der Fig. 3 bzw. Fig. 4 im eingebauten Zustand durch die Last jedoch nicht trennbar. Ferner bewegen sich die beiden Bauteile 16, 17 hier und vorzugsweise bei steigender Last aufeinander zu.

Hier und vorzugsweise ist die Relativverschiebung der Bauteile 16, 17, welche die Bremswirkung reduziert, eine Verdrehung um und/oder eine axiale Verschiebung entlang dem Richtungsvektor der Last, insbesondere des Lastmoments. Hierbei wird die Federanordnung 14, welche hier und vorzugsweise in den Töpfen aufgenommen ist, stärker gespannt und die Reibfläche 12a der sich drehenden Bauteile 16, 17 bewegen sich von den, insbesondere ortsfesten, Reibflächen 12b des Gehäuses 1a weg. Diese Relativverschiebung der Bauteile 16, 17 ist in der Fig. 5 dargestellt. Hier bewegen sich beide Bauteile 16, 17 aufeinander zu.

Ähnlich wie in dem Ausführungsbeispiel der Fig. 3 bzw. 4 kann auch bei dem Ausführungsbeispiel der Fig. 5 eine federnde Lagerung der Reibflächen 12a im Gehäuse vorgesehen sein. Dann sind die Reibflächen 12 vorzugsweise drehfest aber entlang der Antriebsachse 7 verschieblich ausgebildet.

Hier ist es vorzugsweise ebenso wie in der Ausgestaltung der Ausfiihrungsbeispiele der Fig. 3 und 4 vorgesehen, dass eines der Bauteile 16, 17, insbesondere die Bauteile 16, 17, mit Spiel entlang der Antriebsachse 7 auf einem Wellenanschluss der Antriebsmotorseite und/oder der Vorschubgetriebeseite gleiten kann bzw. können. Insofern ist die Bremse 11 vorzugsweise schwimmend zwischen dem Antriebsmotor 5 und dem Vorschubgetriebe 6 gelagert, wie dies vorzugsweise auch im Ausführungsbeispiel der Fig. 6 der Fall ist.

In dem Ausführungsbeispiel der Fig. 6 erfolgt die Reduzierung der Antriebskraft in Abhängigkeit von einer axialen Kraft als Last und nicht in Abhängigkeit von einem Moment als Last. Grundsätzlich ist eine Kombination der Mechanismen der in den Ausführungsbeispielen beschriebenen Bremsen 11 auch dahingehend möglich, dass die Last zur Einstellung der Bremswirkung eine Kombination aus einer axialen Kraft und einem übertragenen Moment ist.

Auch im Ausführungsbeispiel der Fig. 6 sind die Bauteile 16, 17 vorgesehen, welche mit dem Antriebsmotor 5 drehbar ausgebildet sind. Auch diese weisen hier die Reibflächen 12a auf. Die korrespondierenden Reibflächen 12b sind am Gehäuse 1a ausgebildet. Hier bewirkt ebenfalls eine Relativverschiebung infolge einer ansteigenden Last der, hier scheibenartig und/oder tellerartig ausgebildeten, Bauteile 16, 17 eine Reduzierung der Bremswirkung. Vorzugsweise wird hier mindestens ein Bauteil 16, 17 parallel zu dem Richtungsvektor der Last, hier der axialen Zugkraft und/oder axialen Druckkraft, verschoben.

Die Bauteile 16, 17 sind wie in den zuvor beschriebenen Ausführungsbeispielen mit dem Antriebmotor 5 drehgekoppelt. Sie sind hier und vorzugsweise auf einer Welle gelagert und axial verschieblich. Zur Lagerung dient hier die Lagerfederanordnung 20. Alternativ können anstelle dieser federnden Lagerung auch Anschläge vorgesehen sein, welche aus einer, insbesondere lastlosen Stellung (vgl. Fig. 6b) eine axiale Verschiebung der Bauteile 16, 17 nur in eine Richtung entlang der Antriebsachse erlauben. Hier und vorzugsweise eine Bewegung der Bauteile 16, 17 aufeinander zu.

Die Reibflächenpaare 12 sind hier mittels einer Federanordnung 14 aufeinander vorgespannt. Die Federanordnung 14 stützt sich hier an einem mit den Bauteilen 16, 17 mitdrehenden Element 19 ab, welches vorzugsweise axial und drehbar im Gehäuse 1a gelagert ist.

In der Fig. 6b ist die Bremse 11 in einem lastlosen Zustand gezeigt. Wird der Antriebsstrang 8 nun mit einer axialen Drucklast belastet, bewegt sich das Vorschubgetriebe 6 auf den Antriebsmotor 5 zu, wie dies in der Fig. 6a gezeigt ist. Dadurch bewegt sich das Bauteil 17 auf das Bauteil 16 zu. Das Bauteil 16 wird dagegen in axialer Richtung nicht bewegt, da es hier über das Reibflächenpaar 12 am Gehäuse 1a anschlägt.

Die Bremskraft zwischen einem Reibflächenpaar 12, hier rechts, wird dadurch reduziert, dass die Anpresskraft der Reibfläche 12a reduziert wird. Die Anpresskraft an dem anderen Reibflächenpaar 12, hier links, bleibt dagegen vorzugsweise im Wesentlichen konstant.

Das Ausüben einer Druckkraft auf den Antriebsstrang 8 entspricht hier und vorzugsweise einer motorischen Antriebsbewegung zum Öffnen der Verschlusselementanordnung 2 bzw. einer manuellen Antriebsbewegung zum Schließen der Verschlusselementanordnung 2.

Wird auf den Antriebsstrang 8 eine Zugkraft ausgeübt, ergibt sich in umgekehrter Weise die gleiche Wirkungsweise wie in Zusammenhang mit der Druckkraft beschrieben. Es wird lediglich das andere Bauteil 16 auf das Bauteil 17 zu bewegt, während das Bauteil 17 axial nicht bewegt wird. Insofern wird auf die obigen Ausführungen verwiesen. Diese Lastsituation entspricht einer motorischen Antriebsbewegung zum Schließen des Verschlusselements und/oder einer manuellen Antriebsbewegung zum Öffnen der Verschlusselementanordnung 2. In diesem Fall wird, wie in der Fig. 6c gezeigt, die Bremswirkung des einen, hier linken Reibflächenpaares, reduziert, während hier und vorzugsweise die Bremskraft des anderen, hier rechten Reibflächenpaares 12, im Wesentlichen konstant bleibt.

Diese Relativverschiebung der Bauteile 16, 17 für den lastlosen Zustand (Fig. 6b), den Zustand bei einer Drucklast (Fig. 6a) und den Zustand bei einer Zuglast (Fig. 6c) ist in der Fig. 6 gezeigt.

In weiteren nicht in den Figuren dargestellten Ausführungsbeispielen kann auch jeweils nur eines der vorstehend im Zusammenhang mit der Fig. 6 beschriebenen Reibflächenpaare vorgesehen sein. In diesem Fall ergibt sich nur für eine Lastrichtung, nämlich entweder die Druckkraft oder die Zugkraft, die vorschlagsgemäße Reduzierung der Bremswirkung mit ansteigender Last.

Der Verlauf der Reduzierung der Bremswirkung in Abhängigkeit von der Last kann auf einfache Art und Weise in allen vier Ausführungsbeispielen durch die Dimensionierung der Federanordnungen 14, 18, 20, insbesondere der Federanordnung 14 zu der Kupplungsfederanordnung 18 oder zu der Lagerfederanordnung 20, erfolgen.

Wie aus der vorstehenden Erläuterung der vier Ausführungsbeispiele ersichtlich, ist diesen gemeinsam, dass die Bremswirkung mittels einer Relativverschiebung, insbesondere einer Relativverdrehung zumindest in den Ausführungsbeispielen der Fig. 3, 4 und 5, zweier Bauteile 16, 17 im Antriebsstrang 8, insbesondere zweier Bauteile 16, 17 der Bremse 11 im Antriebsstrang 8, infolge einer ansteigenden Last reduziert wird. Hier erfolgt dies jeweils und vorzugsweise durch eine Relativverschiebung der Bauteile 16, 17 entgegen einer Federvorspannung einer Federanordnung 14, 18, insbesondere entlang einer Relativverschiebungskontur 15. Die Relativverschiebungskonturen 15 sind hier und vorzugsweise linear ausgebildet. Sie können auch mehrere lineare Abschnitte aufweisen. Alternativ können sie eine Evolventenkontur aufweisen. Bezüglich der möglichen Ausgestaltung der Relativverschiebungskonturen 15 wird auf die diesbezüglichen Ausführungen in Zusammenhang mit dem Ausführungsbeispiel der Fig. 4 verwiesen. Zur Einstellung der Bremswirkungsreduktion im Verhältnis zur Laststeigerung können die Relativverschiebungskonturen 15 in anderen Ausgestaltungen entsprechend ausgebildet sein. Vorzugsweise ist es hier so, dass aufgrund der Geometrie der Relativverschiebungskontur 15 der Betrag des Verhältnisses aus Bremswirkungsänderung der Bremse 11 zur Laständerung im Antriebsstrang 8 für eine höhere Last im Antriebsstrang größer ist als für eine niedrigere Last.

In den Ausführungsbeispielen und vorzugsweise ist das Vorschubgetriebe 6 als ein Spindel-Spindelmuttergetriebe ausgestaltet. Mit diesem lassen sich auf besonders einfache Art und Weise Rotationsbewegungen in Linearbewegungen bzw. Linearbewegungen in Rotationsbewegungen wandeln.

Auch kann zwischen dem Antriebsmotor 5 und dem Vorschubgetriebe 6, insbesondere zwischen dem Antriebsmotor 5 und der Bremse 11 und/oder der Überlastkupplung 13, ein Untersetzungsgetriebe 21, welches die Drehzahl des Antriebsmotors 5 ins Langsame wandelt, angerordnet sein. Dieses ist hier und vorzugsweise als Planetengetriebe ausgebildet.

Gemäß einer weiteren Lehre ist eine Verschlusselementanordnung 2 eines Kraftfahrzeugs beansprucht, welche eine mit der Karosserie des Kraftfahrzeugs 3 verstellbar gekoppeltes Verschlusselement 4 und mindestens eine Antriebsanordnung 1 der zuvor beschriebenen Art aufweist. Vorzugsweise sind zwei Antriebsanordnungen 1 der zuvor beschriebenen Art vorgesehen, welche je auf einer Seite des Verschlusselements 2 angeordnet sind.

Als besonders vorteilhaft hat es sich herausgestellt, wenn die Antriebsanordnung 1 nicht selbsthemmend ausgestaltet ist und die Bremse 11 das Verschlusselement 4 bei abgeschaltetem Antriebsmotor 5 in Zwischenstellungen hält. Dabei ist das Verschlusselement 4 zum manuellen Verstellen desselben vorzugsweise bei abgeschaltetem Antriebsmotor 5 gegen die Bremswirkung der Bremse 11 verstellbar.

## Patentansprüche

1. Antriebsanordnung einer Verschlusselementanordnung (2) eines Kraftfahrzeugs (3),
wobei die Antriebsanordnung (1) einen Antriebsmotor (5) und ein dem Antriebsmotor (5) nachgeschaltetes Vorschubgetriebe (6) zur Erzeugung linearer Antriebsbewegungen entlang einer geometrischen Antriebsachse (7) aufweist,
wobei der Antriebsmotor (5) und das Vorschubgetriebe (6) in einem Antriebsstrang (8) der Antriebsanordnung (1) angeordnet sind und der Antriebsstrang (8) sich zwischen zwei mechanischen Antriebsanschlüssen (9, 10) zum Ausleiten von Antriebsbewegungen erstreckt und
wobei die Antriebsanordnung (1) eine Bremse (11) zum Abbremsen zumindest eines Teils des Antriebsstrangs (8) aufweist,
wobei bei einer motorischen Antriebsbewegung zum Öffnen der Verschlusselementanordnung (2) und/oder bei einer manuellen Antriebsbewegung zum Schließen der Verschlusselementanordnung (2) mit einer ansteigenden Last im Antriebsstrang (8) die Bremswirkung der Bremse (11) reduziert wird und/oder bei einer motorischen Antriebsbewegung zum Schließen der Verschlusselementanordnung (2) und/oder bei einer manuellen Antriebsbewegung zum Öffnen der Verschlusselementanordnung (2) mit einer ansteigenden Last im Antriebsstrang (8) die Bremswirkung der Bremse (11) reduziert wird,
wobei die Last ein von dem Antriebsstrang (8) übertragenes Moment und/oder eine auf den Antriebsstrang (8) von außen auf die Antriebsanschlüsse (9, 10) wirkende, insbesondere bezogen auf die Antriebsachse (7) axiale, Kraft ist und wobei die Bremse (11) zwischen dem Antriebsmotor (5) und dem Vorschubgetriebe (6) im Antriebsstrang (8) angeordnet ist,
wobei die Bremse (11) mindestens ein Reibflächenpaar (12) zur Erzeugung der Bremswirkung aufweist und dass das Reibflächenpaar (12) mittels einer Federanordnung (14) zur Erzielung der Bremswirkung aufeinander vorgespannt ist,
**dadurch gekennzeichnet,**
**dass** die Bremswirkung mittels einer Relativverschiebung **entlang der Antriebsachse (7)** zweier mit dem Antriebmotor (5) drehgekoppelter Bauteile (16, 17) im Antriebsstrang (8) infolge einer ansteigenden Last reduziert wird, dass die Antriebsanordnung (8) ein Gehäuse (1a) aufweist, dass eine Reibfläche (12b) des Reibflächenpaares (12) drehfest am Gehäuse (1a) angeordnet ist oder durch das Gehäuse (1a) bereitgestellt wird und eine korrespondierende Reibfläche (12a) des Reibflächenpaares (12) **entlang der Antriebsachse (7)** mit dem Bauteil (16) verschiebbar und drehbar ist.

2. Antriebsanordnung nach Anspruch 1, **dadurch gekennzeichnet, dass** die Bremswirkung der Bremse (11) kontinuierlich, insbesondere antiproportional, mit der ansteigenden Last reduziert wird.

3. Antriebsanordnung nach Anspruch 1 oder 2, **dadurch gekennzeichnet, dass** eine vordefinierte, insbesondere untere, Grenzlast vorgesehen ist, ab der die Bremse (11) die Bremswirkung mit ansteigender Last reduziert, vorzugsweise, dass eine vordefinierte, obere Grenzlast vorgesehen ist, ab der die Bremse (11) die Bremswirkung nicht weiter reduziert und/oder bei der der Antriebsstrang aufgetrennt wird.

4. Antriebsanordnung nach einem der vorhergehenden Ansprüche, **dadurch gekennzeichnet, dass** zur Reduzierung der Bremskraft die Vorspannkraft der Federanordnung (14) reduziert wird.

5. Antriebsanordnung nach einem der vorhergehenden Ansprüche, **dadurch gekennzeichnet, dass** die Antriebsanordnung (1), insbesondere im Antriebsstrang (8) eine Überlastkupplung (13) aufweist, die bei einer Überlast im Antriebsstrang (8) den Antriebsstrang (8) auftrennt, vorzugsweise, dass die Überlastkupplung (13) in die Bremse (11) integriert ist.

6. Antriebsanordnung nach Anspruch 5, **dadurch gekennzeichnet, dass** nach einer Auftrennung des Antriebsstrangs (8) durch die Überlastkupplung (13) die Bremse (11) nur auf einen Teil des Antriebsstrangs (8) wirkt, und/oder, dass die Bremse (11) nach einer Auftrennung des Antriebsstrangs (8) durch die Überlastkupplung (13) auf beide Teile des Antriebsstrangs (8) wirkt.

7. Antriebsanordnung nach einem der vorhergehenden Ansprüche, **dadurch gekennzeichnet, dass** die Relativverschiebung der Bauteile (16, 17) entgegen der Federvorspannung einer Federanordnung (14, 18), insbesondere entlang einer Relativverschiebungskontur (15), erfolgt, weiter vorzugsweise, dass aufgrund der Geometrie der Relativverschiebungskontur (15) der Betrag des Verhältnisses aus Bremswirkungsänderung der Bremse (11) zur Laständerung im Antriebsstrang (8) für eine höhere Last im Antriebsstrang größer ist als für eine niedrigere Last.

8. Antriebsanordnung nach einem der vorhergehenden Ansprüche, **dadurch gekennzeichnet, dass** das Vorschubgetriebe (6) ein Spindel-Spindelmuttergetriebe ist.

9. Verschlusselementanordnung eines Kraftfahrzeugs (3) mit einem mit der Karosserie des Kraftfahrzeugs (3) verstellbar gekoppelten Verschlusselement (4) und mit mindestens einer Antriebsanordnung (1), vorzugsweise zwei Antriebsanordnungen (1), nach einem der vorhergehenden Ansprüche.

10. Verschlusselementanordnung nach Anspruch 9, **dadurch gekennzeichnet, dass** die Antriebsanordnung (1) nicht selbsthemmend ausgestaltet ist und die Bremse (11) das Verschlusselement (4) bei abgeschaltetem Antriebsmotor (5) in Zwischenstellungen hält, vorzugsweise, dass das Verschlusselement (4) bei abgeschaltetem Antriebsmotor (5) manuell gegen die Bremswirkung der Bremse (11) verstellbar ist.

## Claims

1. Drive arrangement of a closure-element arrangement (2) of a motor vehicle (3),
wherein the drive arrangement (1) has a drive motor (5) and a feed mechanism (6) which is connected downstream of the drive motor (5) and which serves for generating linear drive movements along a geometrical drive axis (7),
wherein the drive motor (5) and the feed mechanism (6) are arranged in a drivetrain (8) of the drive arrangement (1) and the drivetrain (8) extends between two mechanical drive connections (9, 10) for delivering drive movements, and
wherein the drive arrangement (1) has a brake (11) for braking at least a portion of the drivetrain (8) ,
wherein, during a motorized drive movement for opening the closure-element arrangement (2) and/or during a manual drive movement for closing the closure-element arrangement (2), the braking action of the brake (11) is reduced with increasing load in the drivetrain (8), and/or, during a motorized drive movement for closing the closure-element arrangement (2) and/or during a manual drive movement for opening the closure-element arrangement (2), the braking action of the brake (11) is reduced with increasing load in the drivetrain (8),
wherein the load is a torque transmitted by the drivetrain (8) and/or is a force acting on the drivetrain (8), which acts on the drive connections (9, 10) from the outside, in particular an axial force in relation to the drive axis (7), and wherein the brake (11) is arranged between the drive motor (5) and the feed mechanism (6) in the drivetrain (8),
wherein the brake (11) has at least one friction-surface pair (12) for generating the braking action, and the friction-surface pair (12) is preloaded on one another by means of a spring arrangement (14) for achieving the braking action,
**characterized**
**in that** the braking action is reduced by means of a relative displacement **along the drive axis (7)** of two components (16, 17) in the drivetrain (8), which are coupled in terms of rotation to the drive motor (5), as a consequence of an increasing load, in that the drive arrangement (8) has a housing (1a), in that one friction surface (12b) of the friction-surface pair (12) is arranged in a rotationally fixed manner on the housing (1a) or is provided by the housing (1a) and a corresponding friction surface (12a) of the friction-surface pair (12) is rotatable and displaceable **along the drive axis (7)** with the component (16).

2. Drive arrangement according to Claim 1, **characterized in that** the braking action of the brake (11) is reduced in a continuous, in particular inversely proportional, manner with increasing load.

3. Drive arrangement according to Claim 1 or 2, **characterized in that** a predefined, in particular lower, limit load, beyond which the brake (11) reduces the braking action with increasing load, is provided,
preferably **in that** a predefined upper limit load, beyond which the brake (11) does not reduce the braking action any further, and/or at which the drivetrain is split up, is provided.

4. Drive arrangement according to one of the preceding claims, **characterized in that**, in order for the braking force to be reduced, the preload force of the spring arrangement (14) is reduced.

5. Drive arrangement according to one of the preceding claims, **characterized in that** the drive arrangement (1), in particular in the drivetrain (8), has an overload clutch (13) which, in the case of an overload in the drivetrain (8), splits up the drivetrain (8), preferably **in that** the overload clutch (13) is integrated into the brake (11).

6. Drive arrangement according to Claim 5, **characterized in that**, after a splitting of the drivetrain (8) by the overload clutch (13), the brake (11) acts on only a portion of the drivetrain (8), and/or **in that**, after a splitting of the drivetrain (8) by the overload clutch (13), the brake (11) acts on both portions of the drivetrain (8) .

7. Drive arrangement according to one of the preceding claims, **characterized in that** the relative displacement of the components (16, 17) is realized counter to the spring preload of a spring arrangement (14, 18), in particular along a relative-displacement contour (15), furthermore preferably **in that**, owing to the geometry of the relative-displacement contour (15), the magnitude of the ratio of change in braking action of the brake (11) to change in load in the drivetrain (8) is greater for a higher load in the drivetrain than for a lower load.

8. Drive arrangement according to one of the preceding claims, **characterized in that** the feed mechanism (6) is a spindle-spindle nut mechanism.

9. Closure-element arrangement of a motor vehicle (3), having a closure element (4) which is coupled in an adjustable manner to the body of the motor vehicle (3), and having at least one drive arrangement (1), preferably two drive arrangements (1), according to one of the preceding claims.

10. Closure-element arrangement according to Claim 9, **characterized in that** the drive arrangement (1) is of non-self-locking design and the brake (11) holds the closure element (4) in intermediate positions with the drive motor (5) switched off, preferably in that, with the drive motor (5) switched off, the closure element (4) is able to be adjusted manually counter to the braking action of the brake (11).

## Revendications

1. Ensemble d'entraînement d'un ensemble d'élément de fermeture (2) d'un véhicule automobile (3),
l'ensemble d'entraînement (1) présentant un moteur d'entraînement (5) et une transmission d'avance (6) montée en amont du moteur d'entraînement (5) pour la génération de mouvements d'entraînement linéaires le long d'un axe d'entraînement (7) géométrique,
le moteur d'entraînement (5) et la transmission d'avance (6) étant disposés dans une chaîne cinématique (8) de l'ensemble d'entraînement (1) et la chaîne cinématique (8) s'étendant entre deux raccordements d'entraînement (9, 10) mécaniques servant à évacuer des mouvements d'entraînement et
l'ensemble d'entraînement (1) présentant un frein (11) destiné à freiner au moins une partie de la chaîne cinématique (8),
l'action de freinage du frein (11) étant réduite en cas de charge croissante dans la chaîne cinématique (8) lors d'un mouvement d'entraînement motorisé pour l'ouverture de l'ensemble d'élément de fermeture (2) et/ou lors d'un mouvement d'entraînement manuel pour la fermeture de l'ensemble d'élément de fermeture (2) et/ou,
l'action de freinage du frein (11) étant réduite en cas de charge croissante dans la chaîne cinématique (8) lors d'un mouvement d'entraînement motorisé pour la fermeture de l'ensemble d'élément de fermeture (2) et/ou lors d'un mouvement d'entraînement manuel pour l'ouverture de l'ensemble d'élément de fermeture (2),
la charge étant un couple transmis par la chaîne cinématique (8) et/ou une force, en particulier axiale par rapport à l'axe d'entraînement (7), agissant sur la chaîne cinématique (8) depuis l'extérieur sur les raccordements d'entraînement (9, 10), et
le frein (11) étant disposé entre le moteur d'entraînement (5) et la transmission d'avance (6) dans la chaîne cinématique (8),
le frein (11) présentant au moins une paire de surfaces de friction (12) servant à la génération de l'action de freinage et la paire de surfaces de friction (12) étant précontrainte l'une sur l'autre à l'aide d'un ensemble ressort (14) pour l'obtention de l'action de freinage,
**caractérisé en ce que**
l'action de freinage est réduite à cause d'une charge croissante à l'aide d'un déplacement relatif le long de l'axe d'entraînement (7) de deux composants (16, 17) couplés en rotation au moteur d'entraînement (5) dans la chaîne cinématique (8), **en ce que** l'ensemble d'entraînement (8) présente un carter (1a), **en ce qu'**une surface de friction (12b) de la paire de surfaces de friction (12) est disposée de manière bloquée en rotation sur le carter (1a) ou est fournie par le carter (1a) et une surface de friction (12a) correspondante de la paire de surfaces de friction (12) peut être déplacée et entraînée en rotation avec le composant (16) le long de l'axe d'entraînement (7).

2. Ensemble d'entraînement selon la revendication 1, **caractérisé en ce que** l'action de freinage du frein (11) est réduite en continu, en particulier de manière antiproportionnelle, lorsque la charge est croissante.

3. Ensemble d'entraînement selon la revendication 1 ou 2, **caractérisé en ce qu'**une charge limite prédéfinie, en particulier inférieure, est prévue, à partir de laquelle le frein (11) réduit l'action de freinage lorsque la charge est croissante,
de préférence **en ce qu'**une charge limite prédéfinie, supérieure, est prévue, à partir de laquelle le frein (11) ne réduit pas davantage l'action de freinage et/ou à laquelle la chaîne cinématique est déconnectée.

4. Ensemble d'entraînement selon l'une des revendications précédentes, **caractérisé en ce que** la force de précontrainte de l'ensemble ressort (14) est réduite pour la réduction de la force de freinage.

5. Ensemble d'entraînement selon l'une des revendications précédentes, **caractérisé en ce que** l'ensemble d'entraînement (1) présente, en particulier dans la chaîne cinématique (8), un embrayage de surcharge (13) qui, lors d'une surcharge dans la chaîne cinématique (8), déconnecte la chaîne cinématique (8), de préférence en ce que l'embrayage de surcharge (13) est intégré dans le frein (11).

6. Ensemble d'entraînement selon la revendication 5, **caractérisé en ce qu'**après une déconnexion de la chaîne cinématique (8) au moyen de l'embrayage de surcharge (13), le frein (11) n'agit que sur une partie de la chaîne cinématique (8), et/ou,
**en ce que** le frein (11), après une déconnexion de la chaîne cinématique (8) au moyen de l'embrayage de surcharge (13), agit sur les deux parties de la chaîne cinématique (8).

7. Ensemble d'entraînement selon l'une des revendications précédentes, **caractérisé en ce que** le déplacement relatif des composants (16, 17) s'effectue à l'encontre de la précontrainte de ressort d'un ensemble ressort (14, 18), en particulier le long d'un contour de déplacement relatif (15), plus préférablement **en ce qu'**en raison de la géométrie du contour de déplacement relatif (15), l'amplitude du rapport de la variation d'action de freinage du frein (11) à la variation de charge dans la chaîne cinématique (8) est supérieure pour une charge plus élevée dans la chaîne cinématique que pour une charge plus basse.

8. Ensemble d'entraînement selon l'une des revendications précédentes, **caractérisé en ce que** la transmission d'avance (6) est une transmission à broche/écrou de broche.

9. Ensemble d'élément de fermeture d'un véhicule automobile (3) comportant un élément de fermeture (4) accouplé de manière réglable à la carrosserie du véhicule automobile (3) et comportant au moins un ensemble d'entraînement (1), de préférence deux ensemble d'entraînement (1), selon l'une des revendications précédentes.

10. Ensemble d'élément de fermeture selon la revendication 9, **caractérisé en ce que** l'ensemble d'entraînement (1) n'est pas configuré de manière autobloquante et le frein (11) retient l'élément de fermeture (4) dans des positions intermédiaires lorsque le moteur d'entraînement (5) est coupé, de préférence **en ce que** l'élément de fermeture (4) est réglable manuellement à l'encontre de l'action de freinage du frein (11) lorsque le moteur d'entraînement (5) est coupé.
